# EUROPEAN PATENT SPECIFICATION

(11) **EP 3 238 421 B1**
(45) Date of publication and mention of the grant of the patent: **17.02.2021**
(21) Application number: 16737086.5
(22) Date of filing: 14.01.2016
(51) Int. Cl.: G06F 16/30

(54) **SYSTEM FOR HIGH-THROUGHPUT HANDLING OF TRANSACTIONS IN DATA-PARTITIONED, DISTRIBUTED, RELATIONAL DATABASE MANAGEMENT SYSTEM**
SYSTEM ZUR HOCHDURCHSATZHANDHABUNG VON TRANSAKTIONEN IN DATENPARTITIONIERTEM, VERTEILTEM, RELATIONALEM DATENBANKVERWALTUNGSSYSTEM
SYSTÈME DE GESTION À HAUT RENDEMENT DE TRANSACTIONS DANS UN SYSTÈME DE GESTION DE BASE DE DONNÉES RELATIONNELLE, RÉPARTIE, À DONNÉES PARTITIONNÉES

(30) Priority: 16.01.2015 US 201514599043
(43) Date of publication of application: 01.11.2017
(73) Proprietor: Huawei Technologies Co., Ltd., Longgang District Shenzhen, Guangdong 518129 (CN)
(72) Inventor: CHEN, Mengmeng, San Jose, CA 95134 (US); MORTAZAVI, Masood, San Jose, CA 95129 (US); HU, Ron Chung, Palo Alto, CA 94303 (US)
(74) Representative: Goddar, Heinz J.
(86) International application number: PCT/CN2016/070895
(87) International publication number: WO 2016/112861

(56) References cited:
- CN-A- 101 251 860
- CN-A- 101 848 236
- CN-A- 103 237 045
- CN-A- 103 534 988
- US-A- 6 115 744
- US-A1- 2014 214 894
- US-A1- 2014 229 504

## Description

### BACKGROUND OF THE INVENTION

The development of hardware technologies -- computer processing and storage capabilities, specifically -- have contributed to the proliferation of electronic databases and database management systems (DBMS) in nearly every business and industry. Databases have become indispensable for storing, manipulating, and processing collections of information. Typically, one or more units of data collected in a database are accessed through a transaction. Access is performed by one or more processes, which can be dedicated transaction processing threads. Issues arise when data must be accessed concurrently by several threads.

In conventional database management systems, the access patterns of each transaction, and consequently of each thread, are arbitrary and uncoordinated. To ensure data integrity, each thread enters a one or more sections in the lifetime of each transaction it executes. To prevent corruption of data, logical locks are applied to a section when a thread accesses the section, so that no other thread is allowed to access the section while the current thread is processing. Critical sections, however, incur latch acquisitions and releases, whose overhead increases with the number of parallel threads. Unfortunately, delays can occur in heavily-contended critical sections, with detrimental performance effects. The primary cause of the contention is the uncoordinated data accesses that is characteristic of conventional transaction processing systems. Because these systems (typically) assign each transaction to a separate thread, threads often contend with each other during shared data accesses.

To alleviate the impact of applying logical locks to entire sectors of data, the sectors of data may be partitioned into smaller sections. Each "lock" applies only to the particular partition a thread is manipulating, leaving the other partitions free to be accessed by other threads performing other transactions. The lock manager is responsible for maintaining isolation between concurrently-executing transactions, providing an interface for transactions to request, upgrade, and release locks. However, as the number of concurrently-executing transactions increases due to increasing processing capabilities, in typical transaction processing systems the centralized lock manager is often the first contended component and scalability bottleneck.

Under a recently proposed alternative (Data Oriented Architecture) to the contention issue, rather than coupling each thread with a transaction, one solution is to couple each thread with a disparate subset of the database. Transactions flow from one thread to the other as they access different data. Transactions are decomposed to smaller actions according to the data they access, and are routed to the corresponding threads for execution. Under such a scheme, data objects are shared across actions of the same transaction in order to control the distributed execution of the transaction and to transfer data between actions with data dependencies. These shared objects are called "rendezvous points" or "RVPs." If there is data dependency between two actions, an RVP is placed between them. The RVPs separate the execution of the transaction to different phases. The system cannot concurrently execute actions from the same transaction that belong to different phases.

However, while the proposed alternative offers a solution to contention-related delays, such a solution is directed to data storage implementations in which the processors are tightly coupled and constitute a single database system, and is unsuitable and/or sub-optimal for distributed databases, in which the storage devices are not all attached to a common processing unit such as a CPU, may be stored in multiple computers dispersed over a network of interconnected computers.

US 2014/0214894 A1 discloses an elastic parallel database system where data distribution is container- and container-context based. Container Based Tables are defined and Container Member Tables achieve co-location of data as needed. A polymorphic key may also establish polymorphic key relationships between rows in one table and rows in many other possible tables.

### Summary of the Invention

This Summary is provided to introduce a selection of concepts in a simplified form that are further described below in the Detailed Description. This

Summary is not intended to identify key features or essential features of the claimed subject matter, nor is it intended to be used to limit the scope of the claimed subject matter.

The invention is defined in the appended claims. The present invention is directed to a novel, a topic-based messaging architecture (including schema, protocols, naming conventions, etc.) to be used in a distributed data-oriented OLTP environment. According to an aspect of the claimed subject matter, the topic-based messaging architecture can be implemented as a type of publication-subscription ("pub-sub") messaging pattern.

In one or more embodiments of the topic-based system, messages are published to "topics," or named logical channels. Subscribers in a topic-based system will receive all messages published to the topics to which they subscribe, and all subscribers to a topic will receive the same messages. The publisher is responsible for defining the classes of messages to which subscribers can subscribe. The topic-based messaging interface improves the scalability of a distributed database management system and provides a robust mechanism for message delivery. With the use of topic-based messaging on a distributed data-oriented architecture, two major factors contribute to the increase of system throughput, namely removal of lock contentions and delegating communication messages to a separate message system. Both factors can significantly reduce CPU workload so that the CPUs of database nodes can focus on performing useful database work. That said, the throughput of a distributed data-oriented transaction processing system is therefore improved dramatically, and the system is able to perform transactions on a larger, distributed scale.

According to an aspect of the claimed subject matter, a method is provided for performing database transactions in an online distributed database system. In an embodiment, database transactions are performed by receiving a data-oriented transaction from a client device, generating a commit channel and transaction plan for the transaction in a coordinator, identifying corresponding logic channels from an existing plurality of logic channels, and subscribing processing threads mapped to the logic channels to the commit channel. Thereafter, instructions and notifications are published from the coordinator to the commit channel, and relayed to subscribing threads. Database actions are performed by the threads according to the published instructions, and the completion of the actions is published to the coordinator and the commit channel (and subscribers to the commit channel thereafter).

In one or more embodiments, a transaction plan includes multiple database actions distributed among a plurality of phases, the completion of the actions of a phase is tracked at various serialization points which separate the phases, and signals the completion of the current phase. Database actions performed in the same phase may be performed in parallel or substantially in parallel, and the completion of all phases in a transaction concludes the transaction. In one or more further embodiments, the completion of all phases prompts a two-phase commit protocol to be performed by the coordinator, that may include sending a query to the processing threads for a commit or rollback vote. If all processing threads return a vote to commit, results from the performance of the database actions are committed to the database nodes and the transaction is complete.

According to the embodiments of the claimed subject matter described herein, a high-throughput, distributed, multi-partition transaction system is achieved with high performance, throughput, audit, debugging and monitoring properties. In addition, a loosely coupled distributed system of processing units with internal, data-oriented transaction management mechanisms already in place may be achieved. Additional advantages and features of the invention will become apparent from the description which follows, and may be realized by means of the instrumentalities and combinations particular point out in the appended claims.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 depicts a block diagram of an exemplary topic-based messaging architecture in a distributed database system, in accordance with embodiments of the present invention.
Figure 2 depicts a block diagram of an exemplary publication/subscription data flow diagram in a distributed database system, in accordance with embodiments of the present invention.
Figure 3 depicts a block diagram of an exemplary execution plan of a transaction distributed across a plurality of phases, in accordance with embodiments of the present invention.
Figure 4 depicts an exemplary data structure representing a summary of topics, in accordance with embodiments of the present invention.
Figure 5 depicts a timing graph of an exemplary transaction distributed across a plurality of phases, in accordance with embodiments of the present invention.
Figure 6 depicts an exemplary flowchart of a process for performing database transactions in an online distributed database system, in accordance with embodiments of the present invention.
Figure 7 depicts an exemplary general computing environment upon which embodiments of the present invention may be executed.

### DETAILED DESCRIPTION

Reference will now be made in detail to the preferred embodiments of the claimed subject matter, a method and system for the use of a radiographic system, examples of which are illustrated in the accompanying drawings. While the claimed subject matter will be described in conjunction with the preferred embodiments, it will be understood that they are not intended to limit these embodiments. On the contrary, the claimed subject matter is intended to cover alternatives, modifications and equivalents, which may be included within the scope as defined by the appended claims.

Furthermore, in the following detailed descriptions of embodiments of the claimed subject matter, numerous specific details are set forth in order to provide a thorough understanding of the claimed subject matter. However, it will be recognized by one of ordinary skill in the art that the claimed subject matter may be practiced without these specific details. In other instances, well known methods, procedures, components, and circuits have not been described in detail as not to obscure unnecessarily aspects of the claimed subject matter.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present claimed subject matter, discussions utilizing terms such as "storing," "creating," "protecting," "receiving," "encrypting," "decrypting," "destroying," or the like, refer to the action and processes of a computer system or integrated circuit, or similar electronic computing device, including an embedded system, that manipulates and transforms data represented as physical (electronic) quantities within the computer system's registers and memories into other data similarly represented as physical quantities within the computer system memories or registers or other such information storage, transmission or display devices.

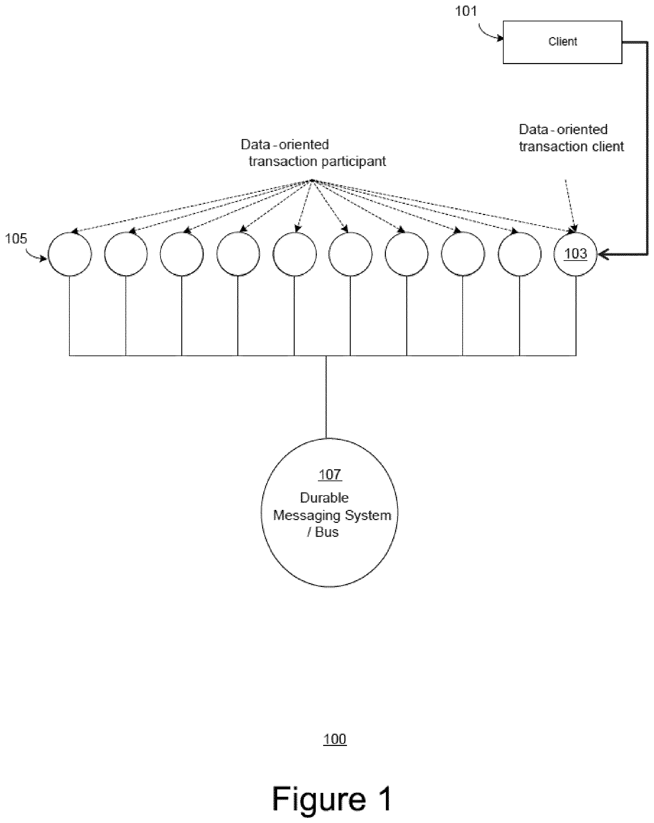

Accordingly, embodiments of the claimed subject matter provide a topic-based messaging architecture to be used in a distributed data-oriented environment, such as an online transaction processing (OLTP) system. According to an embodiment, the topic-based messaging architecture includes a coordinator communicatively coupled to one or more distributed databases by a publication/subscription message bus. Figure 1 depicts an exemplary configuration 100 of such an architecture.

As depicted in Figure 1, a transaction 101 is received in a transaction coordinator 103. In one or more embodiments, the transaction may be implemented as an SQL request from a client device. The transaction coordinator may, for example, be implemented as a computing device, such as a web host and/or server. The transaction may be performed in data stored in one or more database nodes. These nodes may comprise distributed (remotely-located) computing devices, each storing one or more sections (partitions) of data. In alternate embodiments, the nodes may comprise co-located but disparate computing systems, or a combination of both remote and co-located computing systems.

Performance of the actions that comprise the data transaction are performed in data-oriented transaction participants (105), which in one or more embodiments, may be implemented as processing threads corresponding to, and executing in, the one or more database nodes. In a further embodiment, each processing thread is exclusively responsible for performing the actions on the partition of the data corresponding to the processing thread. Each thread may be implemented as an (action) enqueue thread, wherein new actions to be performed are appended to the end of the enqueue thread, and the thread performs the actions in the order received.

In one or more embodiments, the architecture 100 is implemented as topic-based system. Under such an embodiment, communication (messages) between the coordinator are published to "topics" or named logical channels through a messaging system (e.g., bus 107). The logical channels correspond to a particular class. For example, a class may correspond to a specific partition, data entity, or other association or identification with the system. The data-oriented transaction participants can subscribe to one or more logical channels, and subscribers in the system will receive all messages published to the topics to which they subscribe, with each subscribers to a topic receiving the same messages. The publisher is responsible for defining the classes of messages to which subscribers can subscribe.

Likewise, when actions are performed by the processing threads, notification may be published to the coordinator (and other subscribed threads) through the messaging bus 107 by the processing thread 105. In one or more embodiments, a transaction is performed once all sub-actions are performed by the data-oriented transaction participants (105) and a two-phase commit protocol is performed to verify completion of the transaction.

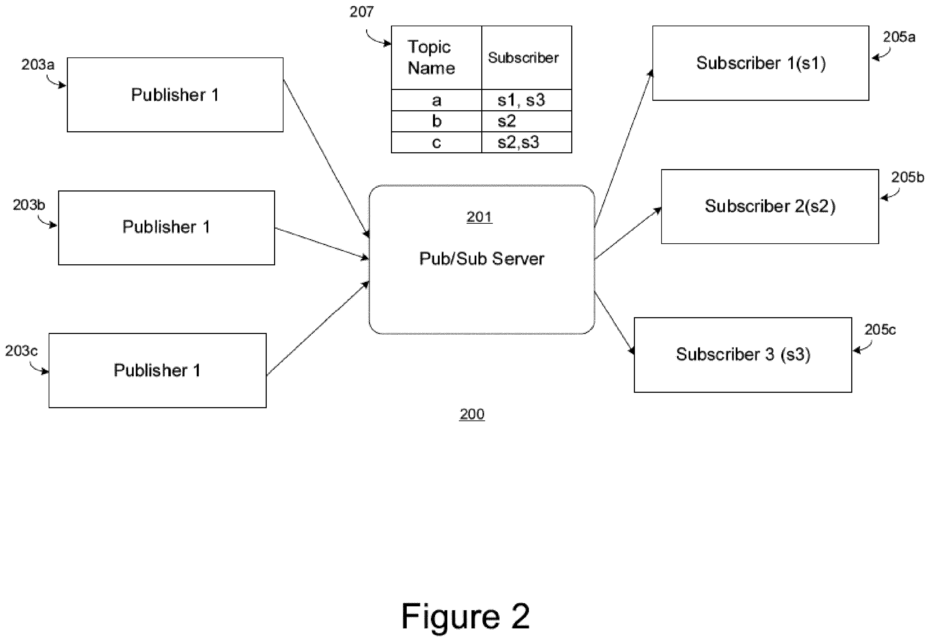

Figure 2 depicts an exemplary publication/subscription data flow diagram 200 in a distributed database system. As depicted in Figure 2, the coordinator of the topic-based messaging architecture described above with respect to Figure 1 may be implemented as, or to include, a publication/subscription server (201). As depicted in Figure 2, one or more message publishers (e.g., 203a, 203b, 203c) publish messages, which are received in the publication/subscription server 201. These messages may include, for example, the completion of one or more actions performed by a processing thread (data-oriented transaction participant) in a transaction.

In one embodiment, the publication/subscription server receives messages sent by a publisher (e.g., through a messaging bus), and identifies (or is provided with) the topic or logic channel the message corresponds to. Subsequently, the publication/subscription server references a table 207 mapping the logic channels to associated subscribers to determine which subscribers are subscribed to the logic channel of the message. The message is then relayed directly to the identified subscribers via the message bus coupling the server 201 to the subscribers (205a, 205b, 205c), while avoiding the nodes/threads that are not subscribed to the message channel.

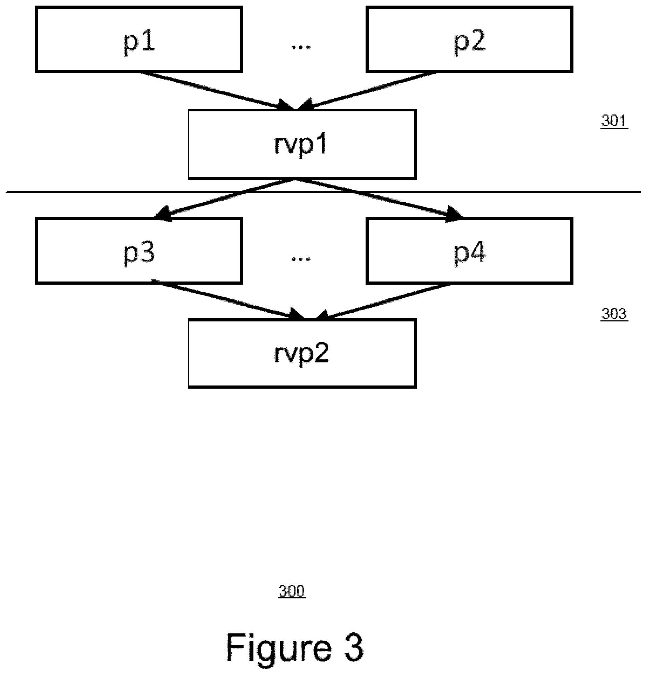

According to one or more embodiments, a client request or transaction is executed as a series of "steps," or phases each of which contains multiple 'actions' that can be scheduled to run in parallel, and with dependency on actions in a previous phase. Figure 3 depicts a typical execution plan 300 for a transaction. As depicted in Figure 3, an execution plan for a transaction includes a plurality of actions (p1, p2, p3, p4) distributed in a series or sequence of phases (301, 303). In one or more embodiments, actions distributed in the same phase (e.g., p1 and p2 in 301, p 3 and p4 in 303) can be executed in parallel by the corresponding processing threads.

Where a dependency arises between two or more actions, a serialization point (rvp1) is created and executed in between the two phases. Thus for example, if action p3 depends on the processing of action p1, and action p4 depends on the processing of p2, p3 and p4 would not start until the completion of p1 and p2, which is verified and communicated (published) at the serialization point rvp1. Publication of the completion of the actions in phase 1 (301) at serialization point rvp1 concludes phase 1, and phase 2 commences once the notification is published to the threads processing p3 and p4.

According to one or more embodiments, the enqueue of the action in a distributed environment is accomplished by sending messages to the specific threads that correspond to p1 p2 and p3, p4, respectively. In the final serialization point, (rvp2 as depicted in Figure 3), a two-phase commit (2PC) is performed, since the involved threads might be located in different nodes. According to one or more embodiments, the number of phases and the number of serialization points can be any arbitrary number, not limited to the depictions described herein. According to one or more further embodiments, a transaction plan can correspond to an organization of database actions performed among any of an arbitrary number of partitions, each with its own corresponding sequence of phases and serialization points.

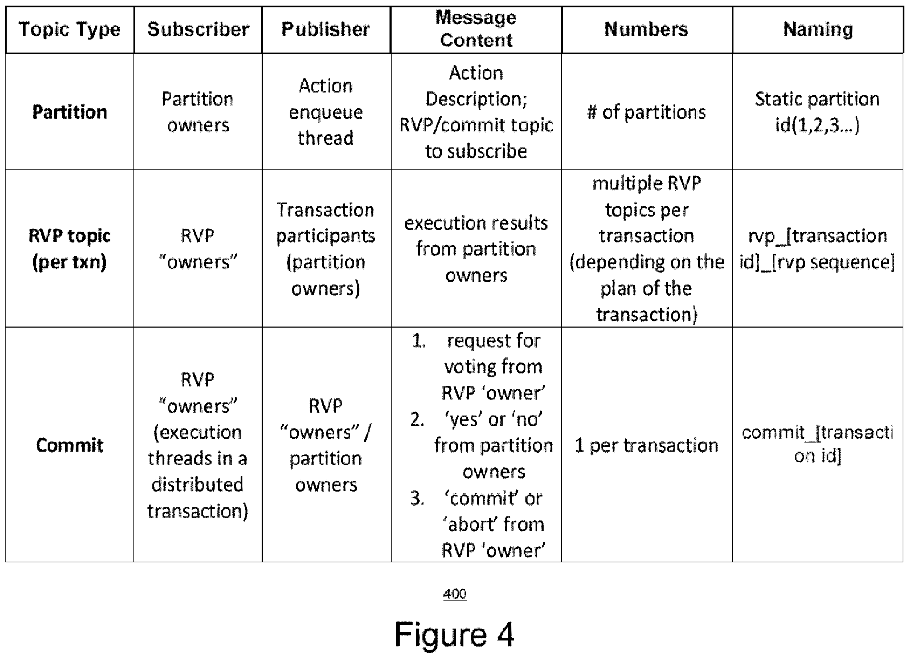

Figure 4 depicts an exemplary data structure 400 comprising a summary of topics. In one or more embodiments, the summary of topics may represent a partition and the entities corresponding to the partition. As depicted in Figure 4, data structure 400 may be implemented as a table or chart that describes the characteristics of topics in the database and corresponding entities. In one or more embodiments, the data structure 400 may be automatically generated (e.g., by a client coordinator, or the node corresponding to the partition). In one or more embodiments, data structure 400 organizes data in the partition according to the various classes. As presented in Figure 4, the classes may include: "topic type," "subscriber," publisher," "message content," numbers," and "naming."

Topic type classifies the topic of a data transaction. As depicted in Figure 4, the topic type may correspond to one of types: 1) Partition, corresponding to the entire data partition; 2) RVP topic, corresponding to a serialization point for a transaction; and 3) a commit topic, corresponding to a topic for publishing the completed performance of database actions.

As presented in Figure 4, the subscriber for a partition is the partition owner. Owners of topics according to Figure 4 are the entities with access to read and write for the particular topic. In one or more embodiments, the partition owner is the processing thread in the node that performs the database actions. In alternate embodiments, the database management system itself may be the owner of the partition. Publishers on the partition topic include the action enqueue thread (processing thread), and the content of messages published to the partition may include a description of the action, and the names/identities of the serialization and commit topics that are to subscribe to the partition topic. The number of partitions corresponds naturally to the number of nodes in the database, and the partition may be named within the database system using a static partition identification number, according to one or more embodiments.

For a serialization point topic (a.k.a. RVP topic), subscribers are the owners of the serialization point, which may include the processing threads of the partitions in which database actions are performed for the phase of a given transaction corresponding to the serialization point. Publishers to the thread are the transaction participants -- likewise, the partition owners. A message published to the serialization topic includes execution results from partition owners for database actions performed in the partition during the phase corresponding to the serialization point. There can be multiple serialization point topics for each transaction, depending on the transaction plan, and the serialization topic may be identified within the database management system with a specific nomenclature that includes an indication of the topic as a serialization point, along with a transaction id and the position in the sequence corresponding to the serialization point.

For a commit topic, subscribers are the owners of the serialization point corresponding to the commit topic, typically the execution threads. Publishers to the commit topic include the owners of the serialization point and the partition owners. Message contents for messages published in a commit channel may include requests for voting (e.g., at the initiation of a commit action) published by a serialization point owner. Other message contents may include a response from the partition owners in response to the request for vote, and a disposition from the serialization point owner based on the received responses (e.g., either to commit the database action results or to abort the performed actions). There is one commit topic for each transaction, and a commit topic is identified with a commit prefix (with a transaction id) within the database management system.

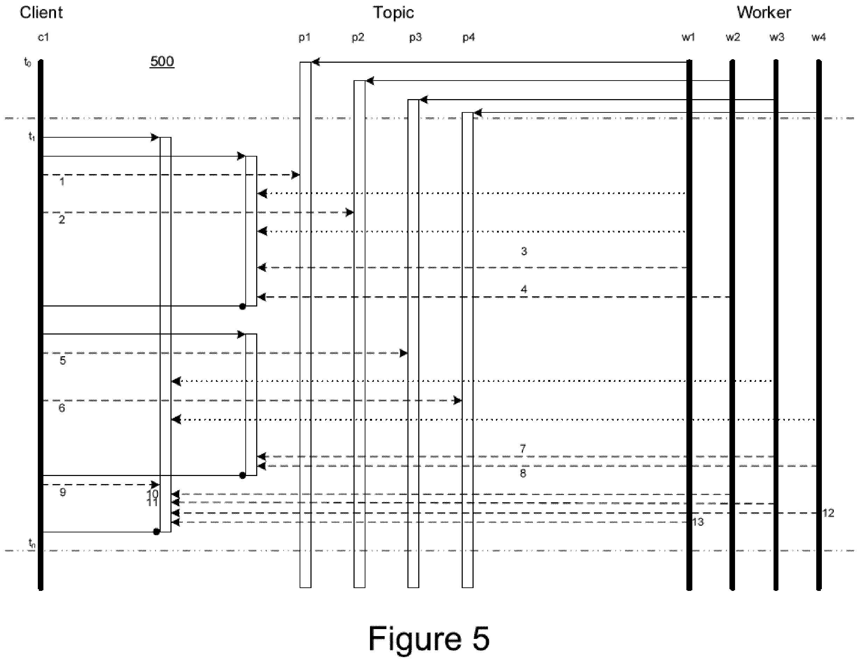

Figure 5 depicts a timing graph 500 of an exemplary transaction distributed across a plurality of phases, in accordance with embodiments of the present invention. Figure 5 depicts an exemplary chronology of events that may be performed during a transaction. As depicted in Figure 5, one or more logic channels, or "topics" may be generated at some time t₀. The logic channels may be generated by a coordinator, for example. One or more processing/execution threads or "workers" (e.g., worker w1, w2, w3, and w4) may be subscribed (indicated by the solid black line) to a corresponding topic, e.g., w1 to p1, w2 to p2, w3 to p3, and w4 to p4, respectively.

At time t₁, a transaction request is issued from a client. The transaction request is received (in a coordinator, for example), and a commit channel/topic is generated by the coordinator. In one or more embodiments, a commit channel may be re-allocated from pre-existing commit channels which have been closed (due to disuse, for example). The coordinator determines associated logic channels, and a execution plan for the transaction. A typical execution plan according to one or more embodiments includes one or more database actions performed over one or more phases, wherein a database action with a dependency on another database action is distributed to a different (subsequent) phase. Phases conclude when database actions in that phase are performed, and verified as performed at a serialization point. Once the execution plan is determined, the coordinator generates serialization points as necessary. For example, as depicted in Figure 5, the transaction includes two phases, and a serialization point (RVP 1, RVP 2) is generated for each phase.

Once the first serialization point is generated, database actions (numbered 1-13) are performed. The coordinator determines the logic channels that correspond to the commit channel, and publishes notification of the correspondence to the particular logic channels. Publications are indicated by dashed lines and subscriptions are indicated by dotted lines in Figure 5. At Action 1, for example, the coordinator publishes the association of the commit channel to channel p1, which is received by the worker (w1) subscribed to channel p1. The worker w1 is thereafter subscribed to the commit channel. Similarly, the coordinator publishes the association of the commit channel to channel p2, which is received by the worker (w2) subscribed to channel p2 at Action 2. The worker w2 is thereafter subscribed to the commit channel.

In one or more embodiments, instructions to perform database actions may be sent to the workers along with the published notifications, or separately/subsequently. Once the database actions are performed, the processing thread publishes notification of the completion of its respective database action to the coordinator (at Actions 3 and 4, respectively). Intermediate results are collected at the serialization point of the first phase. As depicted in Figure 5, the reception of the intermediate results at the serialization point concludes the first phase, and the second serialization point is generated.

Thereafter, the coordinator publishes the association of the commit channel to channels corresponding to the second phase. As depicted in Figure 5, publication is received in logic channel p3, which is received by the worker (w3) subscribed to channel p3 at Action 5; and in logic channel p4, which is received by the worker (w4) subscribed to channel p4 at Action 6. Workers w3 and w4 are thereafter subscribed to the commit channel.

Likewise with respect to phase 1, instructions to perform database actions may be sent to the workers corresponding to phase 2 along with the published notifications, or separately/subsequently. The database actions are performed by the corresponding thread, and the processing thread publishes notification of the completion of its respective database action to the coordinator (at Actions 7 and 8, respectively). Intermediate results from phase 2 are collected at the serialization point of the second phase. The reception of the intermediate results at the serialization point of phase 2 concludes the second phase.

If the execution plan does not include additional phases, a two-phase commit is performed to validate the actions performed during the transaction. In one or more embodiments, the execution plan includes a request for vote (Action 9), initiated by the coordinator, and distributed to the subscribers (in this case, all processing threads involved in the transaction) to the commit channel. If a worker/processing thread is able to confirm completion of the database actions the thread was responsible for performing, the thread publishes a vote to commit (Actions 10, 11, 12, 13 from workers w3, w2, w4, and w1, respectively). If a vote for commit is received by the coordinator from every processing thread, the results collected at the last serialization point is committed (i.e., distributed to each data node and partition), and the transaction is completed. Thereafter, the commit channel may be de-allocated. In alternate embodiments, the commit channel may be reused for subsequent transactions. In the alternative, if a processing thread has not completed its database action, or otherwise encounters an error, a rollback vote may be received, wherein the transaction may be re-attempted using the data in the database when the transaction commenced.

While depicted with four commit topics, it is to be understood that the depiction is for exemplary purposes only, and not to be construed as being limited to such (or any) amount. Indeed, the present invention is well suited to alternate embodiments that include any number of an arbitrary number of topics, for any number of an arbitrary number of phases, separated by any number of an arbitrary number of serialization points. Moreover, while Figure 5 depicts a transaction plan that includes a partition, one or more embodiments of the present invention are well suited to a transaction plan as depicted in Figure 5 and described herein performed in parallel and/or in sequence among a plurality of partitions.

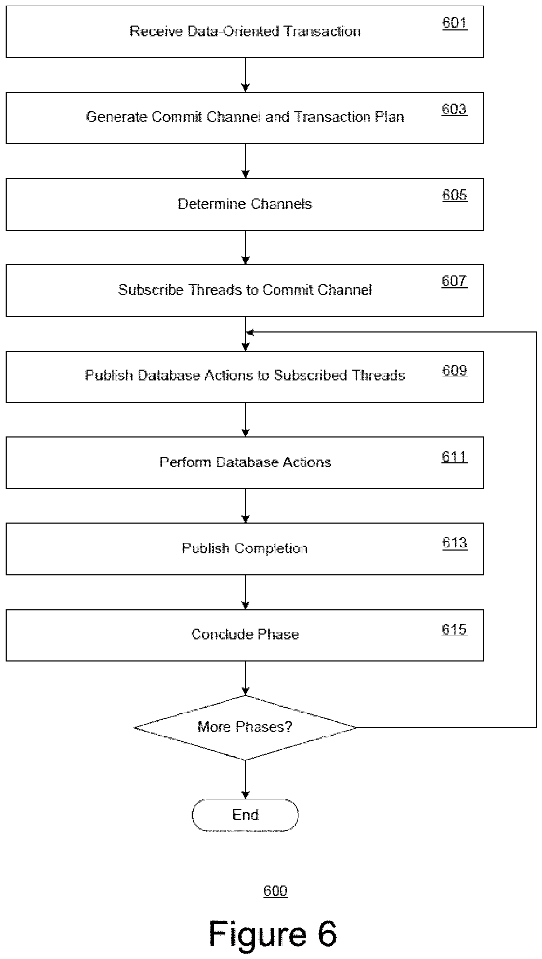

Figure 6 depicts a process 600 for performing database transactions in an online distributed database system. Steps 601 to 615 describe exemplary steps comprising the process 600 depicted in Figure 6 in accordance with the various embodiments herein described. In one embodiment, the process 600 is implemented in whole or in part as computer-executable instructions stored in a computer-readable medium and executed by a processor in a computing device.

As depicted in Figure 6, performance of database transaction begins by receiving a data-oriented transaction from a client device at step 601. In one or more embodiments, the client device comprises a computing device, such as a personal computer or laptop, and the database transaction may be implemented as, or include, a database request such as a Structured Query Language (SQL) request. The database request may be received in a coordinator, implemented as a module or application executing in a networked, computing device, which may be remotely located from the client computing device.

At step 603, the coordinator generates a commit channel and transaction plan for the transaction. In one or more embodiments, the transaction plan includes the database actions and the identification of the networked database nodes (and corresponding processing threads) for which the database actions is to be performed. In further embodiments, the transaction plan includes a sequence of phases, and a distribution of the database actions among the sequence of phases. Serialization points that collect intermediate results between phases may also be generated at step 603.

At step 605, logic channels from an existing plurality of logic channels that correspond to the commit channel are identified by the coordinator, and processing threads mapped to the identified logic channels are subscribed to the commit channel at step 607. In one or more embodiments, the processing threads are identified by referencing a mapping of subscriptions stored in the coordinator. Once the processing threads are subscribed to the commit channel, instructions and notifications are published from the coordinator to the commit channel, and relayed to subscribing threads at step 609. In one or more embodiments, messages (including publications and subscriptions) are performed in a persistent publication/subscription message bus that communicatively couples the coordinator with the database nodes (and processing threads).

At step 611, database actions are performed by the threads according to the published instructions, and once completed, the completion of the actions is published to the coordinator and the commit channel (and subscribers to the commit channel thereafter) at step 613, each through the message bus. The completion of all database actions in a phase concludes a phase (step 613). If subsequent phases are required according to the execution plan, steps 609 through 615 are repeated until no subsequent phases are necessary. In one or more further embodiments, the completion of all phases prompts a two-phase commit protocol to be performed by the coordinator, that may include sending a query to the processing threads for a commit or rollback vote. If all processing threads return a vote to commit, results from the performance of the database actions are committed to the database nodes and the transaction is complete.

Database actions in the same phase are performed in parallel, while the database actions with dependencies on one or more other database actions are distributed in later phases from the database actions depended upon. The completion of the actions of a phase is tracked at various serialization points which separate the phases, and signals the completion of the current phase. Database actions performed in the same phase are performed in parallel or substantially in parallel, and the completion of all phases in a transaction concludes the transaction.

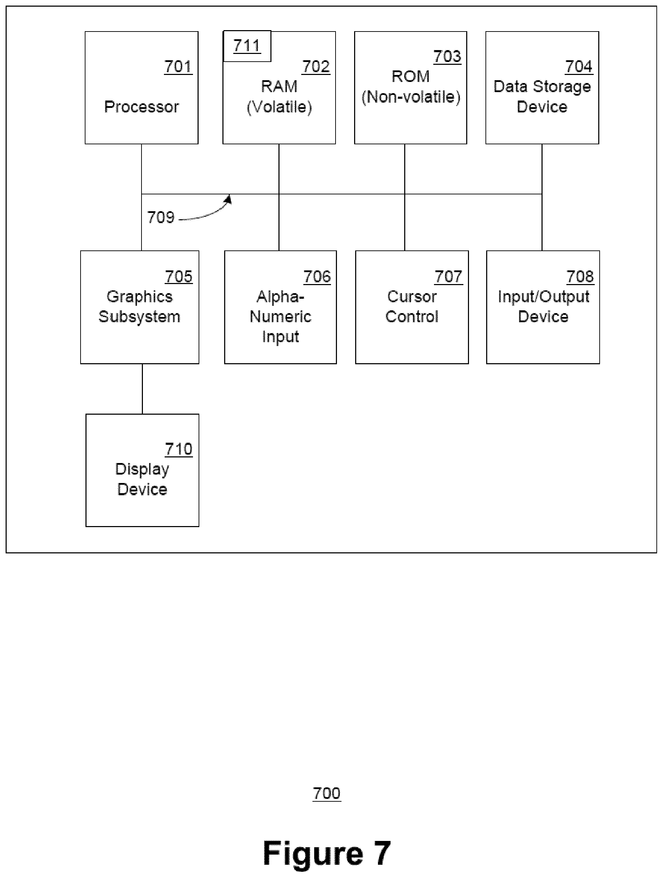

As presented in Figure 7, an exemplary computing environment 700 is depicted, in accordance with embodiments of the present disclosure. In its general configuration, computing environment 700 typically includes at least one processing unit 701 and memory, and an address/data bus 709 (or other interface) for communicating information. Depending on the exact configuration and type of computing environment, memory may be volatile (such as RAM 702), non-volatile (such as ROM 703, flash memory, etc.), some combination of volatile and non-volatile memory, or other suitable device capable of storing for subsequent recall data and/or instructions executable on the processing unit 701. According to one or more embodiments, programmed instructions 711 stored in the memory of computing environment 700 may be executed by the processing unit 701 to perform coordination for data-oriented transactions in a database of distributed among a plurality of partitions.

In some embodiments, computing environment 700 may also comprise an optional graphics subsystem 705 for presenting information to a user, e.g., by displaying information on an attached or integrated display device 710. Additionally, computing system 700 may also have additional features/functionality. For example, computing system 700 may also include additional storage (removable and/or non-removable) including, but not limited to, magnetic or optical disks or tape. Such additional storage is illustrated in Figure 7 by data storage device 704. Computer storage media includes volatile and nonvolatile, removable and non-removable media implemented in any method or technology for storage of information such as computer readable instructions, data structures, program modules or other data. RAM 702, ROM 703, and data storage device 704 are all examples of computer storage media.

Computing environment 700 may also comprise a physical (or virtual) alphanumeric input device 706, an physical (or virtual) cursor control or directing device 707. Optional alphanumeric input device 706 can communicate information and command selections to central processor 701. Optional cursor control or directing device 707 is coupled to bus 709 for communicating user input information and command selections to central processor 701. As shown in Figure 7, computing environment 700 also includes one or more signal communication interfaces (input/output devices, e.g., a network interface card) 707. The signal communication interface may function to receive user input for the computing environment 700, and/or allow the transmission and reception of data with one or more communicatively coupled computing environments.

In the foregoing specification, embodiments have been described with reference to numerous specific details that may vary from implementation to implementation. Thus, the sole and exclusive indicator of what is the invention, and is intended by the applicant to be the invention, is the set of claims that issue from this application, in the specific form in which such claims issue, including any subsequent correction. Hence, no limitation, element, property, feature, advantage, or attribute that is not expressly recited in a claim should limit the scope of such claim in any way. Accordingly, the specification and drawings are to be regarded in an illustrative rather than a restrictive sense.

## Claims

1. A computing device for executing data-oriented transactions in a distributed, multi-partition data management system, the computing device comprising:
- a memory operable to store a plurality of programmed instructions;
- a message bus (107) communicatively coupling the computing device with a plurality of remote computing devices,
- a processor configured to execute the plurality of programmed instructions to perform data-oriented transactions by generating an execution plan for performing database actions in a database stored across a plurality of partitions comprised in a plurality of remote computing devices, generating a commit channel and the execution plan for each transaction in a coordinator, and identifying a logic channel corresponding to the commit channel, wherein a logic channel corresponds to a particular class, the logic channel being mapped to at least one remote computing device of the plurality of remote computing devices, wherein the execution plan organizes the database actions among a plurality of phases separated by a plurality of serialization points and identifies database nodes from the plurality of phases for which the plurality of database actions is to be performed;
wherein transaction participants subscribing to a logic channel receive all messages published to the logic channel, with each subscriber to a logic channel receiving the same messages,
wherein the transaction participants are implemented as processing threads corresponding to and executing in the database nodes, wherein the processing threads mapped to the identified logic channel are subscribed to the commit channel,
wherein the processor is further configured to identify and distribute instructions to perform a database action to the at least one remote computing device based on the logic channel.

2. The computing device of Claim 1, wherein the processor is further configured to receive a transaction request from a client computing device, to generate a new commit channel based on the transaction request, to determine a subset of logic channels that corresponds to the new commit channel, and to distribute notifications of database actions performed corresponding to the commit channel to remote computing devices of the plurality of remote computing devices corresponding to the subset of logic channels.

3. The computing device of Claim 1, wherein the computing device comprises a publish/subscribe server.

4. The computing device of Claim 1, wherein the processor is further configured to distribute instructions to perform a database action by appending the instructions to an action enqueue thread corresponding to a remote computing device.

5. The computing device of Claim 1, wherein a database action of the plurality of database actions is performed via a two-phase commit protocol.

6. The computing device of Claim 1, wherein generating the commit channel comprises reallocating a previously-generated commit channel from a pool of previously-generated commit channels.

7. The computing device of Claim 1, wherein a serialization point of the plurality of serialization points comprises a previously-generated serialization point comprised in a pool of previously-generated serialization points.

8. The computing device of Claim 1, wherein the message bus comprises a publication/ subscription message bus.

9. A method comprising:
a) receiving (601), in a first computing device, a data-oriented transaction from a client computing device;
b) generating (603) a commit channel and an execution plan for the transaction in a coordinator, the execution plan comprising a plurality of database actions organized into a plurality of phases separated by a plurality of serialization points and an identification of database nodes from the plurality of phases for which the plurality of database actions is to be performed,
c) identifying (605) a logic channel corresponding to the commit channel, wherein a logic channel corresponds to a particular class;
d) subscribing (607) a first plurality of processing threads to the commit channel such that the first plurality of processing threads is configured to receive notifications of database actions corresponding to the commit channel to be performed by the first plurality of processing threads, the first plurality of processing threads corresponding to a first phase (301) of the plurality of phases and being mapped to a plurality of remotely-located computing devices, wherein the processing threads mapped to the identified logic channel are subscribed to the commit channel;
e) publishing (609) a set of database actions from the plurality of database actions to be performed by the first plurality of processing threads;
g) publishing, via a message bus, a completion of a first set of database actions of the plurality of database actions corresponding to the first phase on a first data partition of a plurality of data partitions to the commit channel; and
h) terminating the first phase in response to the completion of the first set of actions,
wherein the method further comprises identifying and distributing instructions to perform a database action to the at least one remote computing device based on the logic channel.

10. The method of claim 9, further comprising:
f) receiving notifications of the performance, in parallel, of the first set of database actions;

11. The method of Claim 9, further comprising:
i) receiving intermediate data resulting from the completion of the first set of actions;
j) subscribing a second plurality of processing threads to the commit channel such that the second plurality of processing threads is configured to receive notifications of database actions corresponding to the commit channel to be performed by the second plurality of processing threads, the second plurality of processing threads corresponding to a second phase of the plurality of phases,
k) publishing, via a message bus (107) communicatively coupling a coordinator (103) with the plurality of remotely-located computing devices, a set of database actions from the plurality of database actions to be performed by the second plurality of processing threads;
1) receiving notifications of the performance, in parallel, of a second set of database actions of the plurality of database actions corresponding to the second phase (303) on a second set of data partitions of the plurality of data partitions;
m) publishing (613), via the message bus, a completion of the second set of actions to the commit channel; and
n) terminating (615) the second phase in response to the completion of the second set of actions.

12. The method of Claim 11, further comprising performing steps i) - n) for any number of serialization points of the plurality of serialization points, any number of phases of the plurality of phases corresponding to the data-oriented transaction, and any number of partitions of the plurality of partitions.

13. The method of Claim 11, further comprising performing, in response to publishing the completion of the second set of actions, a two-phase commit of the plurality of database actions.

14. The method of Claim 13, wherein performing a two-phase commit of the plurality of database actions comprises querying the plurality of processing threads to determine the completion of the plurality of database actions.

15. The method of Claim 9, wherein receiving a data-oriented transaction from a client computing device comprises generating an execution plan in the first computing device, the execution plan defining the plurality of phases and the plurality of serialization points.

16. The method of Claim 15, wherein the plurality of processing threads are pre-subscribed to respective corresponding channels of the plurality of channels.

17. The method of Claim 16, further comprising mapping of the plurality of processing threads and the corresponding plurality of channels each of the plurality of processing threads is pre-subscribed to.

18. The method of Claim 9, wherein generating the commit channel comprises reallocating a previously-generated commit channel from a pool of previously-generated commit channels.

19. The method of Claim 9, wherein a serialization point of the plurality of serialization points comprises a previously-generated serialization point comprised in a pool of previously-generated serialization points.

20. Anon-transitory computer readable medium containing programmed instructions embodied therein, which when executed by a processor of a computing device, is operable to perform the method of one of claims 9 to 19.

## Patentansprüche

1. Datenverarbeitungsvorrichtung zum Ausführen von datenorientierten Transaktionen in einem verteilten, mehrfach partitionierten Datenverwaltungssystem, wobei die Datenverarbeitungsvorrichtung Folgendes umfasst:
- einen Speicher, betreibbar zum Speichern mehrerer programmierter Anweisungen;
- einen Nachrichtenbus (107), der die Datenverarbeitungsvorrichtung kommunikativ mit mehreren entfernten Datenverarbeitungsvorrichtungen koppelt,
- einen Prozessor, ausgelegt zum Ausführen der mehreren programmierten Anweisungen zum Durchführen von datenorientierten Transaktionen durch Erzeugen eines Ausführungsplans zum Ausführen von Datenbankaktionen in einer über mehrere Partitionen, die in mehreren entfernten Datenverarbeitungsvorrichtungen enthalten sind, hinweg gespeicherten Datenbank, Erzeugen eines Übergabekanals und des Ausführungsplans für jede Transaktion in einem Koordinator und Identifizieren eines dem Übergabekanal entsprechenden Logikkanals, wobei ein Logikkanal einer bestimmten Klasse entspricht, der Logikkanal auf mindestens eine entfernte Datenverarbeitungsvorrichtung der mehreren entfernten Datenverarbeitungsvorrichtungen abgebildet wird, woebi der Ausführungsplan die Datenbankaktionen unter mehreren durch mehrere Serialisierungspunkte getrennte Phasen organisiert und Datenbankknoten aus den mehreren Phasen identifiziert, für die die mehreren Datenbankaktionen ausgeführt werden sollen;
wobei Transaktionsteilnehmer, die einen Logikkanal abonnieren, alle auf dem Logikkanal publizierten Nachrichten empfangen, wobei jeder Abonnent eines Logikkanals dieselben Nachrichten empfängt,
wobei die Transaktionsteilnehmer als Verarbeitungs-Threads implementiert werden, die den Datenbankknoten entsprechen und daran ausgeführt werden, wobei die Verarbeitungs-Threads, die auf den identifizierten Logikkanal abgebildet werden, auf den Übergabekanal abonniert sind,
wobei der Prozessor ferner ausgelegt ist zum Identifizieren und Verteilen von Anweisungen zum Ausführen einer Datenbankaktion an die mindestens eine entfernte Datenverarbeitungsvorrichtung auf der Basis des Logikkanals.

2. Datenverarbeitungsvorrichtung nach Anspruch 1, wobei der Prozessor ferner ausgelegt ist zum Empfangen einer Transaktionsanforderung von einer Client-Datenverarbeitungsvorrichtung zum Erzeugen eines neuen Übergabekanals auf der Basis der Transaktionsanforderung, zum Bestimmen einer Teilmenge von Logikkanälen, die dem neuen Übergabekanal entspricht, und zum Verteilen von Benachrichtigungen über Datenbankaktionen, die entsprechend dem Überkanal ausgeführt werden, an entfernte Datenverarbeitungsvorrichtungen der mehreren entfernten Datenverarbeitungsvorrichtungen, die der Teilmenge von Logikkanälen entsprechen.

3. Datenverarbeitungsvorrichtung nach Anspruch 1, wobei die Datenverarbeitungsvorrichtung einen "Publish/Subscribe"-Server umfasst.

4. Datenverarbeitungsvorrichtung nach Anspruch 1, wobei der Prozessor ferner ausgelegt ist zum Verteilen von Anweisungen zum Ausführen einer Datenbankaktion durch Anhängen der Anweisungen an einen Aktions-Warteschlangeneinreihungs-Thread, der einer entfernten Datenverarbeitungsvorrichtung entspricht.

5. Datenverarbeitungsvorrichtung nach Anspruch 1, wobei eine Datenbankaktion der mehreren Datenbankaktionen über ein Übergabeprotokoll mit zwei Phasen ausgeführt wird.

6. Datenverarbeitungsvorrichtung nach Anspruch 1, wobei Erzeugen des Übergabekanals Neuvergeben eines zuvor erzeugten Übergabekanals aus einem Pool von zuvor erzeugten Übergabekanälen umfasst.

7. Datenverarbeitungsvorrichtung nach Anspruch 1, wobei ein Serialisierungspunkt der mehreren Serialisierungspunkte einen zuvor erzeugten Serialisierungspunkt umfasst, der in einem Pool von zuvor erzeugten Serialisierungspunkten enthalten ist.

8. Datenverarbeitungsvorrichtung nach Anspruch 1, wobei der Nachrichtenbus einen Publikations-/Abonnement-Nachrichtenbus umfasst.

9. Verfahren, umfassend:
a) Empfangen (601) einer datenorientierten Transaktion von einer Client-Datenverarbeitungsvorrichtung in einer ersten Datenverarbeitungsvorrichtung;
b) Erzeugen (603) eines Übergabekanals und eines Ausführungsplans für die Transaktion in einem Koordinator, wobei der Ausführungsplan Folgendes umfasst: mehrere Datenbankaktionen, die zu mehreren Phasen organisiert werden, die durch mehrere Serialisierungspunkte getrennt werden, und eine Identifikation von Datenbankknoten aus den mehreren Phasen, für die die mehreren Datenbankaktionen ausgeführt werden sollen,
c) Identifizieren (605) eines dem Übergabekanal entsprechenden Logikkanals, wobei ein Logikkanal einer bestimmten Klasse entspricht;
d) Abonnieren (607) von mehreren ersten Verarbeitungs-Threads auf den Übergabekanal dergestalt, dass die mehreren ersten Verarbeitungs-Threads dafür ausgelegt sind, Benachrichtigungen über Datenbankaktionen, die dem Übergabekanal entsprechen, die durch die mehreren ersten Verarbeitungs-Threads auszuführen sind, zu erhalten, wobei die mehreren ersten Verarbeitungs-Threads einer ersten Phase (301) der mehreren Phasen entsprechen und auf mehrere entfernt angeordnete Datenverarbeitungsvorrichtungen abgebildet werden, wobei die auf den identifizierten Logikkanal abgebildeten Verarbeitungs-Threads auf den Übergabekanal abonniert werden;
e) Publizieren (609) einer Menge von Datenbankaktionen aus den mehreren Datenbankaktionen, die durch die mehreren ersten Verarbeitungs-Threads auszuführen sind;
g) Publizieren eines Abschlusses einer ersten Menge von Datenbankaktionen der mehreren Datenbankaktionen, die der ersten Phase auf einer ersten Datenpartition mehrerer Datenpartitionen entsprechen, an den Übergabekanal über einen Nachrichtenbus; und
h) Beenden der ersten Phase als Reaktion auf den Abschluss der ersten Menge von Aktionen,
wobei das Verfahren ferner Identifizieren und Verteilen von Anweisungen zum Ausführen einer Datenbankaktion an die mindestens eine entfernte Datenverarbeitungsvorrichtung auf der Basis des Logikkanals umfasst.

10. Verfahren nach Anspruch 9, ferner umfassend:
f) Empfangen von Benachrichtigungen über das Ausführen auf parallele Weise der ersten Menge von Datenbankaktionen;

11. Verfahren nach Anspruch 9, ferner umfassend:
i) Empfangen von Zwischendaten, die sich aus dem Abschluss der ersten Menge von Aktionen ergeben;
j) Abonnieren von mehreren zweiten Verarbeitungs-Threads auf den Übergabekanal dergestalt, dass die mehreren zweiten Verarbeitungs-Threads dafür ausgelegt sind, Benachrichtigungen über Datenbankaktionen zu empfangen, die dem Übergabekanal entsprechen, die durch die mehreren zweiten Verarbeitungs-Threads ausgeführt werden sollen, wobei die mehreren zweiten Verarbeitungs-Threads einer zweiten Phase der mehreren Phasen entsprechen,
k) Publizieren einer Menge von Datenbankaktionen aus den mehreren Datenbankaktionen, die durch die mehreren zweiten Verarbeitungs-Threads auszuführen sind, über einen Nachrichtenbus (107), der einen Koordinator (103) kommunikativ mit den mehreren entfernt angeordneten Datenverarbeitungsvorrichtungen koppelt;
1) Empfangen von Benachrichtigungen des Ausführens auf parallele Weise einer zweiten Menge von Datenbankaktionen der mehreren Datenbankaktionen, die der zweiten Phase (303) auf einer zweiten Menge von Datenpartitionen der mehreren Datenpartitionen entsprechen;
m) Publizieren (613) eines Abschlusses der zweiten Menge von Aktionen an den Übergabekanal über den Nachrichtenbus; und
n) Beenden (615) der zweiten Phase als Reaktion auf den Abschluss der zweiten Menge von Aktionen.

12. Verfahren nach Anspruch 11, ferner umfassend: Ausführen der Schritte i) - n) für eine beliebige Anzahl von Serialisierungspunkten der mehreren Serialisierungspunkte, eine beliebige Anzahl von Phasen der mehreren Phasen, die der datenorientierten Transaktion entsprechen, und eine beliebige Anzahl von Partitionen der mehreren Partitionen.

13. Verfahren nach Anspruch 11, ferner umfassend: Ausführen einer Übergabe mit zwei Phasen der mehreren Datenbankaktionen als Reaktion auf Publizieren des Abschlusses der zweiten Menge von Aktionen.

14. Verfahren nach Anspruch 13, wobei Ausführen einer Übergabe mit zwei Phasen der mehreren Datenbankaktionen Abfragen der mehreren Verarbeitungs-Threads zur Bestimmung des Abschlusses der mehreren Datenbankaktionen umfasst.

15. Verfahren nach Anspruch 9, wobei Empfangen einer datenorientierten Transaktion von einer Client-Datenverarbeitungsvorrichtung Erzeugen eines Ausführungsplans in der ersten Datenverarbeitungsvorrichtung umfasst, wobei der Ausführungsplan die mehreren Phasen und die mehreren Serialisierungspunkte definiert.

16. Verfahren nach Anspruch 15, wobei die mehreren Verarbeitungs-Threads auf jeweilige entsprechende Kanäle der mehreren Kanäle vorabonniert werden.

17. Verfahren nach Anspruch 16, das ferner Abbilden der mehreren Verarbeitungs-Threads und der entsprechenden mehreren Kanäle, auf die jeder der mehreren Verarbeitungs-Threads vorabonniert ist, umfasst.

18. Verfahren nach Anspruch 9, wobei Erzeugen des Übergabekanals Neuvergeben eines zuvor erzeugten Übergabekanals aus einem Pool zuvor erzeugter Übergabekanäle umfasst.

19. Verfahren nach Anspruch 9, wobei ein Serialisierungspunkt der mehreren Serialisierungspunkte einen zuvor erzeugten Serialisierungspunkt umfasst, der in einem Pool von zuvor erzeugten Serialisierungspunkten enthalten ist.

20. Nichttransitorisches computerlesbares Medium, das darin realisierte programmierte Anweisungen enthält, das, wenn es durch einen Prozessor einer Datenverarbeitungsvorrichtung ausgeführt wird, betreibbar ist zum Ausführen des Verfahrens nach einem der Ansprüche 9 bis 19.

## Revendications

1. Dispositif informatique destiné à exécuter des transactions orientées données dans un système de gestion de données réparti à multiples partitions, le dispositif informatique comprenant:
une mémoire pouvant fonctionner pour stocker une pluralité d'instructions programmées ;
un bus de message (107) couplant en communication le dispositif informatique avec une pluralité de dispositifs informatiques distants ;
un processeur configuré pour exécuter la pluralité d'instructions programmées pour exécuter des transactions orientées données par la génération d'un plan d'exécution pour exécuter des actions de base de données dans une base de données stockée sur une pluralité de partitions comprises dans une pluralité de dispositifs informatiques distants, la génération d'un canal de validation et du plan d'exécution pour chaque transaction dans un coordinateur, et l'identification d'un canal logique correspondant au canal de validation, dans lequel un canal logique correspond à une classe particulière, le canal logique étant mis en correspondance avec au moins un dispositif informatique distant de la pluralité de dispositifs informatiques distants, dans lequel le plan d'exécution organise les actions de base de données parmi une pluralité de phases séparées par une pluralité de points de sérialisation et identifie des nœuds de base de données parmi la pluralité de phases pour lesquelles les actions de la pluralité d'actions de base de données doivent être exécutées ;
dans lequel les participants à la transaction s'abonnant à un canal logique reçoivent tous les messages publiés sur le canal logique, chaque abonné à un canal logique recevant les mêmes messages,
dans lequel les participants à la transaction sont mis en œuvre sous forme de fils de traitement correspondant à et s'exécutant dans les nœuds de base de données, dans lequel les fils de traitement mis en correspondance avec le canal logique identifié sont abonnés au canal de validation,
dans lequel le processeur est en outre configuré pour identifier et répartir des instructions pour exécuter une action de base de données sur l'au moins un dispositif informatique distant sur la base du canal logique.

2. Dispositif informatique selon la revendication 1, dans lequel le processeur est en outre configuré pour recevoir une demande de transaction depuis un dispositif informatique
client, pour générer un nouveau canal de validation sur la base de la demande de transaction, pour déterminer un sous-ensemble de canaux logiques qui correspond au nouveau canal de validation, et pour répartir des notifications d'actions de base de données exécutées correspondant au canal de validation sur des dispositifs informatiques distants de la pluralité de dispositifs informatiques distants correspondant au sous-ensemble de canaux logiques.

3. Dispositif informatique selon la revendication 1, le dispositif informatique comprenant un serveur de publication/abonnement.

4. Dispositif informatique selon la revendication 1, dans lequel le processeur est en outre configuré pour répartir des instructions pour exécuter une action de base de données par l'ajout des instructions à un fil de file d'attente d'action correspondant à un dispositif informatique distant.

5. Dispositif informatique selon la revendication 1, dans lequel une action de base de données de la pluralité d'actions de base de données est exécutée par le biais d'un protocole de validation à deux phases.

6. Dispositif informatique selon la revendication 1, dans lequel la génération du canal de validation comprend la réattribution d'un canal de validation précédemment généré parmi une réserve de canaux de validation précédemment générés.

7. Dispositif informatique selon la revendication 1, dans lequel un point de sérialisation de la pluralité de points de sérialisation comprend un point de sérialisation précédemment généré compris dans une réserve de points de sérialisation précédemment générés.

8. Dispositif informatique selon la revendication 1, dans lequel le bus de message comprend un bus de message de publication/abonnement.

9. Procédé comprenant :
a) la réception (601), dans un premier dispositif informatique, d'une transaction orientée données depuis un dispositif informatique client ;
b) la génération (603) d'un canal de validation et d'un plan d'exécution pour la transaction dans un coordinateur, le plan d'exécution comprenant une pluralité d'actions de base de données organisées en une pluralité de phases séparées par une pluralité de points de sérialisation et une identification de nœuds de base de données parmi la pluralité de phases pour lesquelles les actions de la pluralité d'actions de base de données doivent être exécutées,
c) l'identification (605) d'un canal logique correspondant au canal de validation, dans lequel un canal logique correspond à une classe particulière ;
d) l'abonnement (607) d'une première pluralité de fils de traitement au canal de validation afin que les fils de la première pluralité de fils de traitement soient configurés pour recevoir des notifications d'actions de base de données correspondant au canal de validation à exécuter par la première pluralité de fils de traitement, la première pluralité de fils de traitement correspondant à une première phase (301) de la pluralité de phases et étant mise en correspondance avec une pluralité de dispositifs informatiques situés à distance, dans lequel les fils de traitement mis en correspondance avec le canal logique identifié sont abonnés au canal de validation ;
e) la publication (609) d'un ensemble d'actions de base de données parmi la pluralité d'actions de base de données à exécuter par la première pluralité de fils de traitement ;
g) la publication, par le biais d'un bus de message, d'un achèvement d'un premier ensemble d'actions de base de données de la pluralité d'actions de base de données correspondant à la première phase sur une première partition de données d'une pluralité de partitions de données sur le canal de validation ; et
h) la fin de la première phase en réponse à l'achèvement du premier ensemble d'actions,
le procédé comprenant en outre l'identification et la répartition d'instructions pour exécuter une action de base de données sur l'au moins un dispositif informatique distant sur la base du canal logique.

10. Procédé selon la revendication 9, comprenant en outre :
f) la réception de notifications de la performance, en parallèle, du premier ensemble d'actions de base de données.

11. Procédé selon la revendication 9, comprenant en outre :
i) la réception de données intermédiaires résultant de l'achèvement du premier ensemble d'actions ;
j) l'abonnement d'une seconde pluralité de fils de traitement au canal de validation afin que les fils de la seconde pluralité de fils de traitement soient configurés pour recevoir des notifications d'actions de base de données correspondant au canal de validation à exécuter par la seconde pluralité de fils de traitement, la seconde pluralité de fils de traitement correspondant à une seconde phase de la pluralité de phases,
k) la publication, par le biais d'un bus de message (107) couplant en communication un coordinateur (103) avec la pluralité de dispositifs informatiques situés à distance, d'un ensemble d'actions de base de données parmi la pluralité d'actions de base de données à exécuter par la seconde pluralité de fils de traitement ;
1) la réception de notifications de la performance, en parallèle, d'un second ensemble d'actions de base de données de la pluralité d'actions de base de données correspondant à la seconde phase (303) sur un second ensemble de partitions de données de la pluralité de partitions de données ;
m) la publication (613), par le biais du bus de message, d'un achèvement du second ensemble d'actions sur le canal de validation ; et
n) la fin (615) de la seconde phase en réponse à l'achèvement du second ensemble d'actions.

12. Procédé selon la revendication 11, comprenant en outre l'exécution des étapes i) à n) pour tout nombre de points de sérialisation de la pluralité de points de sérialisation, tout nombre de phases de la pluralité de phases correspondant à la transaction orientée données et tout nombre de partitions de la pluralité de partitions.

13. Procédé selon la revendication 11, comprenant en outre l'exécution, en réponse à la publication de l'achèvement du second ensemble d'actions, d'une validation à deux phases de la pluralité d'actions de base de données.

14. Procédé selon la revendication 13, dans lequel l'exécution d'une validation à deux phases de la pluralité d'actions de base de données comprend la demande à la pluralité de fils de traitement de déterminer l'achèvement de la pluralité d'actions de base de données.

15. Procédé selon la revendication 9, dans lequel la réception d'une transaction orientée données depuis un dispositif informatique client comprend la génération d'un plan d'exécution dans le premier dispositif informatique, le plan d'exécution définissant la pluralité de phases et la pluralité de points de sérialisation.

16. Procédé selon la revendication 15, dans lequel les fils de la pluralité de fils de traitement sont pré-abonnés aux canaux correspondants respectifs de la pluralité de canaux.

17. Procédé selon la revendication 16, comprenant en outre la mise en correspondance de la pluralité de fils de traitement et de la pluralité correspondante de canaux auxquels chaque fil de la pluralité de fils de traitement est pré-abonné.

18. Procédé selon la revendication 9, dans lequel la génération du canal de validation comprend la réattribution d'un canal de validation précédemment généré parmi une réserve de canaux de validation précédemment générés.

19. Procédé selon la revendication 9, dans lequel un point de sérialisation de la pluralité de points de sérialisation comprend un point de sérialisation précédemment généré compris dans une réserve de points de sérialisation précédemment générés.

20. Support non transitoire lisible par ordinateur contenant des instructions programmées incorporées à l'intérieur, qui lorsque les instructions sont exécutées par un processeur d'un dispositif informatique, peut fonctionner pour exécuter le procédé selon l'une quelconque des revendications 9 à 19.
